# EUROPÄISCHE PATENTANMELDUNG

(11) **EP 4 670 871 A1**
(43) Veröffentlichungstag der Anmeldung: **31.12.2025**
(21) Anmeldenummer: 25183647.4
(22) Anmeldetag: 18.06.2025
(51) Int. Cl.: B22F 1/107, B22F 1/148, B22F 9/04, C22C 1/04, C22C 1/10, H01M 4/40, H01M 10/052

(54) **VERFAHREN ZUR HERSTELLUNG VON METALLPULVER SOWIE METALLPULVER UND DESSEN VERWENDUNG**

(30) Priorität: 19.06.2024 DE 102024205641
(71) Anmelder: Fraunhofer-Gesellschaft zur Förderung der angewandten Forschung e.V., 80686 München (DE)
(72) Erfinder: Twyhues, Andreas, 38108 Braunschweig (DE); Wulfert-Holzmann, Paul, 38108 Braunschweig (DE); Melzig, Sebastian, 38108 Braunschweig (DE); Zellmer, Sabrina, 38108 Braunschweig (DE); Janssen, Jutta, 38108 Braunschweig (DE); Kwade, Arno, 38108 Braunschweig (DE)
(74) Vertreter: Pfenning, Meinig & Partner mbB

(57) **Zusammenfassung**

Die vorliegende Erfindung betrifft ein Verfahren zur Herstellung von Metallpulver, bei welchem eine Mischung umfassend mindestens ein Metallmaterial und mindestens ein Lösungsmittel bereitgestellt wird, die Mischung mindestens einem Mahlprozess unterzogen wird, und das mindestens eine Lösungsmittel durch Abdampfen von der Mischung abgetrennt wird. Das mindestens eine Metallmaterial ist ausgewählt aus der Gruppe bestehend aus Alkalimetallen, Indium sowie Mischungen und Legierungen hiervon. Das mindestens eine Lösungsmittel weist einen Dampfdruck bei 20 °C von mindestens 0,002 bar auf und ist ausgewählt aus der Gruppe bestehend aus aliphatischen Kohlenwasserstoffen, aromatischen Kohlenwasserstoffen, sowie Mischungen hiervon. Der mindestens eine Mahlprozess erfolgt bei einer Temperatur, die mindestens 10 °C unter dem Schmelzpunkt des mindestens einen Lösungsmittels liegt. Im Weiteren betrifft die vorliegende Erfindung auch ein Metallpulver sowie dessen Verwendung.

## Beschreibung

Die vorliegende Erfindung betrifft ein Verfahren zur Herstellung von Metallpulver, bei welchem eine Mischung umfassend mindestens ein Metallmaterial und mindestens ein Lösungsmittel bereitgestellt wird, die Mischung mindestens einem Mahlprozess unterzogen wird, und das mindestens eine Lösungsmittel durch Abdampfen von der Mischung abgetrennt wird. Das mindestens eine Metallmaterial ist ausgewählt aus der Gruppe bestehend aus Alkalimetallen, Indium sowie Mischungen und Legierungen hiervon. Das mindestens eine Lösungsmittel weist einen Dampfdruck bei 20 °C von mindestens 0,002 bar auf und ist ausgewählt aus der Gruppe bestehend aus aliphatischen Kohlenwasserstoffen, aromatischen Kohlenwasserstoffen, sowie Mischungen hiervon. Der mindestens eine Mahlprozess erfolgt bei einer Temperatur, die mindestens 10 °C unter dem Schmelzpunkt des mindestens einen Lösungsmittels liegt. Im Weiteren betrifft die vorliegende Erfindung auch ein Metallpulver sowie dessen Verwendung.

Bei der Zerkleinerung von Metallmaterial weicher Metalle, wie z.B. Lithium, zu Metallpulver besteht die Herausforderung darin, dass das Metall aufgrund seiner Weichheit nicht für klassische Zerkleinerungsprozesse, wie z.B. Zerkleinerung mit Prall- oder Kugelmühlen, geeignet ist.

Den Schwerpunkt der bisherigen Veröffentlichung zur Zerkleinerung von Lithium-Metall bildet bisher die sog. "Droplet Emulsion Technique" (DET-Methode), bei der das Metall in hochsiedenden Flüssigkeiten, z.B. organischen Lösemitteln oder Silicon-Öl, auf Temperaturen von 200 - 210 °C aufgeheizt wird, um das Lithium (Schmelzpunkt: 180,5 °C) zum Schmelzen zu bringen. Durch starkes Rühren mit Drehzahlen von 3000 - 25000 U/min wird das geschmolzene Metall zu kleinen Tropfen (µm-Maßstab) zerkleinert, die durch Abkühlen der Dispersion erstarren und als Feststoff abgetrennt werden können (siehe z.B. Song et al., Journal of the Korean Physical Society, Vol. 54, No. 3, March 2009, 1136-1140; sowie WO 2012/052265 A2). Diese DET-Methode kann in kleinem Labormaßstab z. B. in einem offenen Gefäß auf einer Heizplatte mit separatem Rührelement erfolgen, so z. B.in einer Glovebox oder in einem Trockenraum. Nachteil hierbei ist die offene Handhabung der heißen Lithiumschmelze in organischen Lösemitteln, die ein nicht unerhebliches Sicherheitsrisiko darstellt. Zu beachten ist zudem, dass das Rührelement bei Durchführung in einer Glovebox aufgrund der geringeren Wärmeleitfähigkeit von Argon stark aufheizt und dadurch ggf. frühzeitig ausfällt. Um den Prozess zu skalieren, kann z. B. ein (Edelstahl-)Reaktorsystem mit Temperiereinheit eingesetzt werden, das je nach Lösemittel-Wahl druckstabil sein muss. Die Inertisierung dieses Systems kann durch Betrieb in einer Glovebox oder in einem Trockenraum realisiert werden, beide Lösungen sind mit einem hohen Platz- bzw. Infrastruktur-Bedarf verbunden. Hinzukommt, dass zum Erreichen der notwendigen Scherkräfte ein hoher Energieeintrag notwendig ist; die Auswahl eines geeigneten Rührelements wird jedoch durch die Kompatibilität mit dem Reaktorsystem eingeschränkt, sodass die Rührgeschwindigkeiten in der Regel bis ca. 3000 U/min limitiert sind.

Ausgehend hiervon war es die Aufgabe der vorliegenden Erfindung ein auf einfache Weise durchführbares Verfahren zur Herstellung von Metallpulver weicher Metalle (bzw. Metallmaterialien) anzugeben.

Diese Aufgabe wird bezüglich eines Verfahrens zur Herstellung von Metallpulver mit den Merkmalen des Patentanspruchs 1 und bezüglich eines Metallpulvers mit den Merkmalen des Patentanspruchs 11 gelöst. Patentanspruch 14 gibt Verwendungsmöglichkeiten des erfindungsgemäßen Metallpulvers an. Die jeweils abhängigen Patentansprüche betreffen bevorzugte Ausführungsformen.

Erfindungsgemäß wird somit ein Verfahren zur Herstellung von Metallpulver angegeben, bei welchem
a) eine Mischung umfassend mindestens ein Metallmaterial und mindestens ein Lösungsmittel bereitgestellt wird, wobei das mindestens eine Metallmaterial ausgewählt ist aus der Gruppe bestehend aus Alkalimetallen, Indium sowie Mischungen und Legierungen hiervon und wobei das mindestens eine Lösungsmittel einen Dampfdruck bei 20 °C von mindestens 0,002 bar aufweist und ausgewählt ist aus der Gruppe bestehend aus aliphatischen Kohlenwasserstoffen, aromatischen Kohlenwasserstoffen, sowie Mischungen hiervon,
b) die Mischung mindestens einem Mahlprozess unterzogen wird, der bei einer Temperatur erfolgt, die mindestens 10 °C unter dem Schmelzpunkt des mindestens einen Lösungsmittels liegt, und
c) das mindestens eine Lösungsmittel durch Abdampfen von der Mischung abgetrennt wird.

In Schritt a) wird zunächst eine Mischung bereitgestellt, die mindestens ein Metallmaterial und mindestens ein Lösungsmittel umfasst oder daraus besteht. Das mindestens eine Metallmaterial ist ausgewählt aus der Gruppe bestehend aus Alkalimetallen, Indium sowie Mischungen und Legierungen hiervon. Es handelt sich somit um ein weiches Metallmaterial bzw. ein Metallmaterial aus weichen Metallen. Das mindestens eine Lösungsmittel weist einen Dampfdruck von mindestens 0,002 bar bei 20 °C auf. Zudem ist das mindestens eine Lösungsmittel ausgewählt aus der Gruppe bestehend aus aliphatischen Kohlenwasserstoffen, aromatischen Kohlenwasserstoffen, sowie Mischungen hiervon.

Der Dampfdruck des mindestens einen Lösungsmittels bei 20 °C kann beispielsweise bestimmt werden mittels eines Isoteniskops (bzw. kann beispielsweise isoteniskopisch bestimmt werden).

In Schritt b) wird die in Schritt a) bereitgestellte Mischung mindestens einem Mahlprozess unterzogen. Der mindestens eine Mahlprozess erfolgt bei einer Temperatur, die mindestens 10 °C unter dem Schmelzpunkt des mindestens einen Lösungsmittels liegt.

In Schritt c) wird (nach dem in Schritt b) durchgeführten Mahlprozess) das mindestens eine Lösungsmittel durch Abdampfen von der Mischung abgetrennt. Das Abdampfen kann beispielsweise bei Raumtemperatur und/oder ohne Unterdruckbeaufschlagung erfolgen.

Durch das erfindungsgemäße Verfahren kann eine Zerkleinerung von weichem Metallmaterial, nämlich mindestens einem Metallmaterial ausgewählt aus der Gruppe bestehend aus Alkalimetallen, Indium sowie Mischungen und Legierungen hiervon, erreicht werden, sodass ein Metallpulver aus weichem Metallmaterial erhalten wird. Zur Zerkleinerung dient hierbei mindestens ein Mahlprozess, wobei das mindestens eine Metallmaterial dem Mahlprozess zusammen in einer Mischung mit mindestens einem speziellen Lösungsmittel unterzogen wird. Dieses dient dabei dem Schutz des mindestens einen Metallmaterials, z.B. vor ungewollter Reaktion. Es wurde überraschend festgestellt, dass Lösungsmittel ausgewählt aus der Gruppe bestehend aus aliphatischen Kohlenwasserstoffen, aromatischen Kohlenwasserstoffen, sowie Mischungen hiervon einen sehr guten Schutz des mindestens einen Metallmaterials während des Mahlprozesses gewährleisten, wenn der mindestens eine Mahlprozess bei einer Temperatur erfolgt, die mindestens 10 °C unter dem Schmelzpunkt des mindestens einen Lösungsmittels liegt. Hierbei liegt das mindestens eine Lösungsmittel während dem Mahlprozess in fester Form vor, wodurch überraschenderweise eine exzellente Schutzfunktion für das mindestens eine Metallmaterial erreicht wird. Zudem wird die Auswahl des mindestens einen Lösungsmittels aus der Gruppe bestehend aus aliphatischen Kohlenwasserstoffen, aromatischen Kohlenwasserstoffen, sowie Mischungen hiervon sichergestellt, dass das mindestens eine Lösungsmittel nicht selbst mit dem mindestens einen Metallmaterial reagiert, da diese Lösungsmittel z.B. unpolar sind. Ohne den Einsatz des Lösungsmittels könnte das Zerkleinerungsgut beispielsweise zusammenschmelzen oder sich an umliegenden Oberflächen (Mahlkugeln, Behälterwand) abscheiden, was z.B. auf einen hohen Energieeintrag zurückgeführt werden kann.

Ein besonderer Vorteil des erfindungsgemäßen Verfahrens ergibt sich daraus, dass das mindestens eine Lösungsmittel einen Dampfdruck von mindestens 0,002 bar bei 20 °C aufweist. So kann das mindestens eine Lösungsmittel nach dem mindestens einen Mahlprozess nämlich auf einfache Weise durch Abdampfen (z.B. bei Raumtemperatur) von der Mischung (bzw. von dem Metallpulver) abgetrennt werden. Auf aufwendige Reinigungsschritte zum Abtrennen des Lösungsmittels, kann somit im erfindungsgemäßen Verfahren verzichtet werden, wodurch das Verfahren weiter vereinfacht wird. Durch das Vermeiden solcher Reinigungsschritte kann zudem sowohl die Ausbeute als auch die Reinheit gesteigert werden. Außerdem kann der Prozess so besser skaliert werden und ist insgesamt wirtschaftlicher.

Beispielsweise ist es möglich, dass das in Schritt a) eingesetzte mindestens eine Metallmaterial und/oder das hergestellte Metallpulver (metallische und/oder nicht-metallische) Verunreinigungen (z.B. Sauerstoff und/oder Kohlenstoff) enthält/enthalten. Alternativ ist es beispielsweise auch möglich, dass das in Schritt a) eingesetzte mindestens eine Metallmaterial und/oder das hergestellte Metallpulver keine (metallischen und/oder nicht-metallischen) Verunreinigungen enthält/enthalten.

Beispielsweise kann das hergestellte Metallpulver auch bezeichnet werden als Pulver bestehend aus mindestens einem Metall und optional (metallischen und/oder nicht-metallischen) Verunreinigungen, wobei das mindestens eine Metall ausgewählt ist aus der Gruppe bestehend aus Alkalimetallen, Indium sowie Mischungen und Legierungen hiervon, wobei das mindestens eine Metall bevorzugt ausgewählt ist aus der Gruppe bestehend aus Lithium, Natrium, Indium sowie Mischungen und Legierungen hiervon.

Beispielsweise kann das das in Schritt a) eingesetzte mindestens eine Metallmaterial auch bezeichnet werden als mindestens ein Material bestehend aus mindestens einem Metall und optional (metallischen und/oder nicht-metallischen) Verunreinigungen, wobei das mindestens eine Metall ausgewählt ist aus der Gruppe bestehend aus Alkalimetallen, Indium sowie Mischungen und Legierungen hiervon, wobei das mindestens eine Metall bevorzugt ausgewählt ist aus der Gruppe bestehend aus Lithium, Natrium, Indium sowie Mischungen und Legierungen hiervon.

Eine bevorzugte Ausführungsform des erfindungsgemäßen Verfahrens ist dadurch gekennzeichnet, dass das mindestens eine Metallmaterial ausgewählt ist aus der Gruppe bestehend aus Lithium, Natrium, Indium sowie Mischungen und Legierungen hiervon.

Eine weitere bevorzugte Ausführungsform des erfindungsgemäßen Verfahrens zeichnet sich dadurch aus, dass das mindestens eine Metallmaterial als Granulat, als mindestens eine Folie, und/oder als mindestens ein Barren vorliegt, wobei das Granulat vorzugsweise aus Granulatpartikeln mit einer mittleren Partikelgröße d50 im Bereich von 0,5 mm bis 10 mm, bevorzugt von 1 mm bis 5 mm, besteht.

Die mittlere Partikelgröße d50 der Granulatpartikel kann beispielsweise bestimmt werden mittels Laserbeugung (bzw. mittels Laser-Diffraktion bzw. mittels Geräten, die Laser-Diffraktion durchführen). Dabei wird die Probe mit einem Laserstrahl bestrahlt und anschließend die Intensität des gestreuten Lichts gemessen und anhand der Ergebnisse die mittlere Partikelgröße angeben.

Eine weitere bevorzugte Ausführungsform des erfindungsgemäßen Verfahrens ist dadurch gekennzeichnet, dass das mindestens eine Lösungsmittel
- ausgewählt ist aus der Gruppe bestehend aus Xylol, Toluol, Hexan, Heptan, Octan, Nonan, Cyclohexan, sowie Mischungen hiervon, bevorzugt ausgewählt ist aus der Gruppe bestehend aus p-Xylol, n-Heptan, sowie Mischungen hiervon, und/oder
- einen Dampfdruck bei 20 °C von mindestens 0,005 bar, bevorzugt von mindestens 0,01 bar, besonders bevorzugt von mindestens 0,05 bar, ganz besonders bevorzugt im Bereich von 0,09 bar bis 0,14 bar, aufweist, und/oder
- einen Siedepunkt von maximal 151 °C, bevorzugt von maximal 140 °C, besonders bevorzugt im Bereich von 60 °C bis 140 °C, aufweist.

Der Dampfdruck des mindestens einen Lösungsmittels bei 20 °C kann beispielsweise bestimmt werden mittels eines Isoteniskops (bzw. kann beispielsweise isoteniskopisch bestimmt werden).

Der Siedepunkt des mindestens einen Lösungsmittels kann beispielsweise bestimmt werden mittels dynamischer Differenzkalorimetrie (DSC, "Differential Scanning Calorimetry").

Für den Fall, dass das Lösungsmittel ausgewählt ist aus der Gruppe bestehend aus Xylol, Toluol, Hexan, Heptan, Octan, Nonan, Cyclohexan, sowie Mischungen hiervon kann ein besonders guter Schutz des mindestens einen Metallmaterials, z.B. vor ungewollter Reaktion, erreicht werden. Ein ganz besonders guter Schutz des mindestens einen Metallmaterials, z.B. vor ungewollter Reaktion, kann erreicht werden, wenn das mindestens eine Lösungsmittel ausgewählt ist aus der Gruppe bestehend aus p-Xylol, n-Heptan, sowie Mischungen hiervon.

Durch einen höheren Dampfdruck kann das mindestens eine Lösungsmittel nach dem mindestens einen Mahlprozess noch schneller und einfacher durch Abdampfen (z.B. bei Raumtemperatur) von der Mischung (bzw. von dem Metallpulver) abgetrennt werden.

Eine weitere bevorzugte Ausführungsform des erfindungsgemäßen Verfahrens zeichnet sich dadurch aus, dass der mindestens eine Mahlprozess
- über eine Dauer von 1 min bis 5 h, bevorzugt von 10 min bis 90 min, erfolgt, und/oder
- in einer Schwingmühle (z.B. Kryomühle) bei einer Schwingfrequenz im Bereich von 1 Hz bis 100 Hz, bevorzugt von 5 Hz bis 40 Hz, erfolgt.

Eine weitere bevorzugte Ausführungsform des erfindungsgemäßen Verfahrens ist dadurch gekennzeichnet, dass der mindestens eine Mahlprozess mindestens einen Vormahlprozess und mindestens einen Hauptmahlprozess umfasst, die in einer Schwingmühle (z.B. Kryomühle) durchgeführt werden, wobei vorzugsweise der mindestens eine Vormahlprozess bei einer Schwingfrequenz im Bereich von 1 Hz bis 10 Hz und über eine Dauer von 1 min bis 30 min erfolgt und/oder der mindestens eine Hauptmahlprozess bei einer Schwingfrequenz im Bereich von 15 Hz bis 100 Hz, bevorzugt von 20 Hz bis 40 Hz, und über eine Dauer von 10 min bis 5 h, bevorzugt von 20 min bis 90 min, erfolgt.

Eine weitere bevorzugte Ausführungsform des erfindungsgemäßen Verfahrens zeichnet sich dadurch aus, dass der mindestens eine Mahlprozess unter Verwendung von Mahlkugeln erfolgt, wobei die Mahlkugeln vorzugsweise
- ein Material enthalten oder daraus bestehen, welches ausgewählt ist aus der Gruppe bestehend aus Zirconiumdioxid, Siliciumnitrid, Wolframcarbid, Edelstahl, sowie Mischungen hiervon, wobei die Mahlkugeln bevorzugt Zirconiumdioxid enthalten oder daraus bestehen, und/oder
- jeweils einen Durchmesser im Bereich von 5 mm bis 30 mm, bevorzugt von 10 mm bis 20 mm, aufweisen.

Die Verwendung von Zirconiumdioxid-Mahlkugeln ist besonders bevorzugt, da so das Risiko von Verunreinigungen am besten minimiert werden kann.

Eine weitere bevorzugte Ausführungsform des erfindungsgemäßen Verfahrens ist dadurch gekennzeichnet, dass der mindestens eine Mahlprozess bei einer Temperatur erfolgt,
- die mindestens 20 °C, bevorzugt mindestens 30 °C, besonders bevorzugt mindestens 40 °C, unter dem Schmelzpunkt des mindestens einen Lösungsmittels liegt, und/oder
- die maximal -100 °C beträgt, bevorzugt maximal -150 °C beträgt, besonders bevorzugt im Bereich von -230°C bis -150 °C liegt, ganz besonders bevorzugt im Bereich von -210 °C bis -175 °C liegt,
wobei der mindestens eine Mahlprozess insbesondere unter Kühlung mit flüssigem Stickstoff erfolgt.

### Durch eine Durchführung des mindestens einen Mahlprozesses bei einer

Temperatur von die mindestens 20 °C, bevorzugt mindestens 30 °C, besonders bevorzugt mindestens 40 °C, unter dem Schmelzpunkt des mindestens einen Lösungsmittels liegt, kann besser gewährleistet werden, dass das mindestens eine Lösungsmittel in fester Form vorliegt und nicht durch Energieeintrag durch den Mahlprozess teilweise in flüssiger Form vorliegt.

Eine weitere bevorzugte Ausführungsform des erfindungsgemäßen Verfahrens zeichnet sich dadurch aus, dass das Abdampfen in Schritt c) bei einer Temperatur im Bereich von 5 °C bis 50 °C, bevorzugt bei einer Temperatur im Bereich von 10 °C bis 40 °C, besonders bevorzugt bei Raumtemperatur, erfolgt.

Vorzugsweise wird Schritt a) und/oder Schritt b) und/oder Schritt c) des erfindungsgemäßen Verfahrens, besonders bevorzugt das gesamte erfindungsgemäße Verfahren, unter Inertgas-Atmosphäre, z.B. unter Argon-Atmosphäre, durchgeführt (insbesondere, wenn das mindestens eine Metallmaterial mindestens ein Alkalimetall ist oder umfasst). Beispielsweise kann Schritt a) und/oder Schritt b) und/oder Schritt c) des erfindungsgemäßen Verfahrens, besonders bevorzugt das gesamte erfindungsgemäße Verfahren, in einer Glovebox unter Inertgas-Atmosphäre, z.B. unter Argon-Atmosphäre, durchgeführt werden (insbesondere, wenn das mindestens eine Metallmaterial mindestens ein Alkalimetall ist oder umfasst). Beispielweise kann auch nur ein Teil des erfindungsgemäßen Verfahrens in einer Glovebox und ein anderer Teil des erfindungsgemäßen Verfahrens (z.B. der mindestens eine Mahlprozess) außerhalb einer Glovebox unter Verwendung eines oder mehrerer abgedichteter Behälter durchgeführt werden. Hierbei kann beispielweise eine Abdichtung zur Vermeidung von Verunreinigungen durch die Bildung von Kondenswasser erfolgen.

Im Weiteren betrifft die vorliegende Erfindung auch ein Metallpulver aus einem Metallmaterial ausgewählt aus der Gruppe bestehend aus Alkalimetallen, Indium sowie Mischungen und Legierungen hiervon, wobei das Metallpulver aus Pulverpartikeln besteht, die als Aggregate vorliegen und jeweils eine Partikelgröße im Bereich von 0,6 µm bis 20 µm aufweisen, und wobei das Metallpulver (vorzugsweise) mit dem erfindungsgemäßen Verfahren herstellbar oder hergestellt ist.

Durch die Herstellung mit dem erfindungsgemäßen Verfahren weisen die Pulverpartikel des erfindungsgemäßen Verfahrens eine unregelmäßige bzw. irreguläre Form (z.B. plättchenartige Form) auf, wobei sie zudem als (jeweils mehrere Pulverpartikel umfassende bzw. daraus bestehende) Aggregate vorliegen und jeweils eine Partikelgröße im Bereich von 0,6 µm bis 20 µm aufweisen.

Die Form der Pulverpartikel und/oder das Vorliegen als Aggregate kann beispielsweise mittels REM (bzw. anhand von REM-Aufnahmen) bestimmt werden.

Die jeweilige Partikelgröße der Pulverpartikel kann beispielsweise bestimmt werden mittels Rasterelektronenmikroskopie oder auch mittels Laserbeugung.

Beispielsweise ist es möglich, dass das erfindungsgemäße Metallpulver und/oder das Metallmaterial (metallische und/oder nicht-metallische) Verunreinigungen (z.B. Sauerstoff und/oder Kohlenstoff) enthält/enthalten. Alternativ ist es beispielsweise auch möglich, dass das erfindungsgemäße Metallpulver und/oder das Metallmaterial keine (metallischen und/oder nicht-metallischen) Verunreinigungen enthält/enthalten.

Beispielsweise kann das erfindungsgemäße Metallpulver auch bezeichnet werden als Pulver aus einem Material bestehend aus mindestens einem Metall und optional (metallischen und/oder nicht-metallischen) Verunreinigungen, wobei das mindestens eine Metall ausgewählt ist aus der Gruppe bestehend aus Alkalimetallen, Indium sowie Mischungen und Legierungen hiervon, wobei das mindestens eine Metall bevorzugt ausgewählt ist aus der Gruppe bestehend aus Lithium, Natrium, Indium sowie Mischungen und Legierungen hiervon, wobei das Pulver aus Pulverpartikeln besteht, die als Aggregate vorliegen und jeweils eine Partikelgröße im Bereich von 0,6 µm bis 20 µm aufweisen, und wobei das Pulver (vorzugsweise) mit dem erfindungsgemäßen Verfahren herstellbar oder hergestellt ist.

Eine bevorzugte Ausführungsform des erfindungsgemäßen Metallpulvers ist dadurch gekennzeichnet, dass das mindestens eine Metallmaterial ausgewählt ist aus der Gruppe bestehend aus Lithium, Natrium, Indium sowie Mischungen und Legierungen hiervon.

Eine weitere bevorzugte Ausführungsform des erfindungsgemäßen Metallpulvers zeichnet sich dadurch aus, dass
- die Pulverpartikel jeweils eine Partikelgröße im Bereich von 0,8 µm bis 10 µm, bevorzugt von 1µm bis 5 µm, aufweisen, und/oder
- die Aggregate jeweils eine Partikelgröße im Bereich von 5 µm bis 250 µm, bevorzugt von 1µm bis 100 µm, aufweisen.

Die jeweilige Partikelgröße der Pulverpartikel kann beispielsweise bestimmt werden mittels Rasterelektronenmikroskopie oder auch mittels Laserbeugung.

Die Partikelgröße der Aggregate kann beispielsweise bestimmt werden mittels Rasterelektronenmikroskopie oder auch mittels Laserbeugung.

Zudem betrifft die vorliegende Erfindung auch die Verwendung des erfindungsgemäßen Metallpulvers zur Herstellung von Elektroden, vorzugsweise Elektroden für Batterien, als chemisches Agens, oder als Brennstoff.

Anhand der nachfolgenden Beispiele und Figuren soll die vorliegende Erfindung näher erläutert werden, ohne diese auf die hier gezeigten spezifischen Ausführungsformen und Parameter zu beschränken.

### Ausführungsbeispiel 1

Es werden 500 mg Lithium-Metallgranulat (3-4 mm Durchmesser) und zwei Zirconiumdioxid-Kugeln als Mahlkugeln (15 mm Durchmesser) in einer Schwingmühle (z.B. Kryomühle) eingesetzt. Zusätzlich zu Granulat und Mahlkugeln werden 3,5 mL organisches Lösemittelausgewählt ist aus der Gruppe bestehend aus aliphatischen Kohlenwasserstoffen, aromatischen Kohlenwasserstoffen, sowie Mischungen hiervon (z. B. p-Xylol) zugegeben. Anschließend erfolgt eine 15-minütige Vorkühlung bzw. ein Vormahlprozess bei einer Schwingfrequenz von 5 Hz. Die eigentliche Zerkleinerung bzw. der Hauptmahlprozess erfolgt für 10-90 min bei 30 Hz. Der Mahlprozess erfolgt dabei bei einer Temperatur, die mindestens 10 °C unter dem Schmelzpunkt des mindestens einen Lösungsmittels liegt. Anschließend kann das Produkt unter inerten Bedingungen (Argonatmosphäre) geborgen und das Lösemittel verdampft werden.

Es wird ein graues Produkt erhalten. Es weist Partikel mit unregelmäßiger, plättchenartiger Form auf, die als Aggregate vorliegen und jeweils eine Partikelgröße im Bereich von 0,6 µm bis 20 µm, bevorzugt von 0,8 µm bis 10 µm, besonders bevorzugt von 1 µm bis 5 µm, aufweisen.

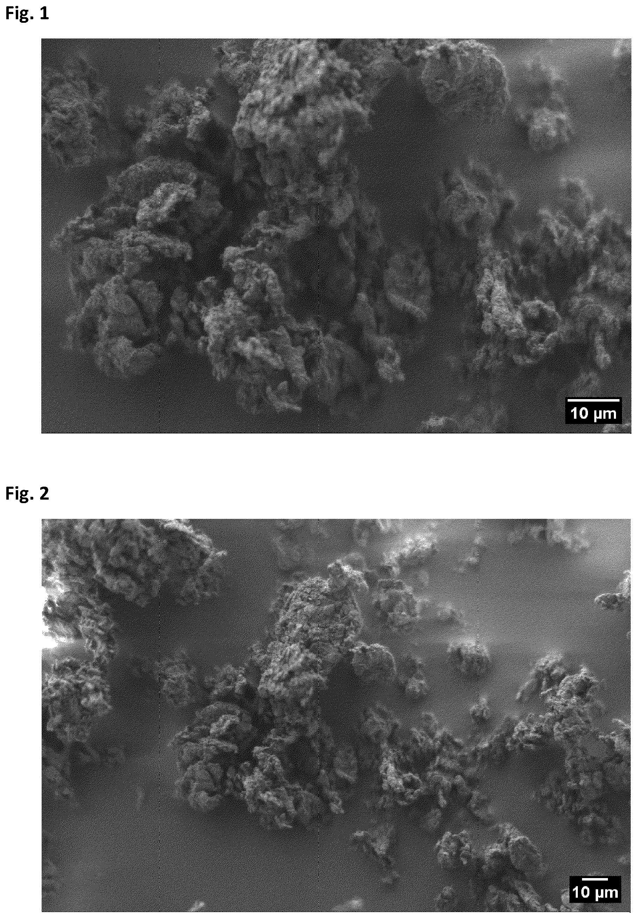

In Fig. 1 und Fig. 2 sind REM-Aufnahmen der Partikel des hergestellten Produkts bzw. Pulvers in unterschiedlichen Vergrößerungen gezeigt.

### Ausführungsbeispiel 2

Analog zu dem Vorgehen gemäß Ausführungsbeispiel 1 wird die Zerkleinerung von Indium zu Indiumpulver durchgeführt. Dazu werden 1 - 2,5 g Indium-Metallgranulat (< 5 mm Durchmesser) (anstelle des in Ausführungsbeispiel verwendeten Lithium-Metallgranulats) eingesetzt. Ansonsten ist das Vorgehen wie in Ausführungsbeispiel 1 beschrieben.

Es wird ein graues Produkt erhalten. Es weist Partikel mit unregelmäßiger, plättchenartiger Form auf, die als Aggregate vorliegen und jeweils eine Partikelgröße im Bereich von 0,6 µm bis 20 µm, bevorzugt von 0,8 µm bis 10 µm, besonders bevorzugt von 1 µm bis 5 µm, aufweisen.

### Ausführungsbeispiel 3

Analog zu dem Vorgehen gemäß Ausführungsbeispiel 1 wird die Zerkleinerung von Natrium zu Natriumpulver durchgeführt. Dazu werden 500 mg Natrium-Folie (anstelle des in Ausführungsbeispiel verwendeten Lithium-Metallgranulats) eingesetzt. Ansonsten ist das Vorgehen wie in Ausführungsbeispiel 1 beschrieben.

Es wird ein graues Produkt erhalten. Es weist Partikel mit unregelmäßiger, plättchenartiger Form auf, die als Aggregate vorliegen und jeweils eine Partikelgröße im Bereich von 0,6 µm bis 20 µm, bevorzugt von 0,8 µm bis 10 µm, besonders bevorzugt von 1 µm bis 5 µm, aufweisen.

### Ausführungsbeispiel 4

Analog zu dem Vorgehen gemäß Ausführungsbeispiel 1 wird die Herstellung von Indium/Lithium-Pulvermischungen durchgeführt. Dazu wird eine Mischung aus 60 mg Lithium- und 2940 mg Indium-Granulat (anstelle des in Ausführungsbeispiel verwendeten Lithium-Metallgranulats) eingesetzt. Ansonsten ist das Vorgehen wie in Ausführungsbeispiel 1 beschrieben.

Es wird ein graues Produkt erhalten. Es weist Partikel mit unregelmäßiger, plättchenartiger Form auf, die als Aggregate vorliegen und jeweils eine Partikelgröße im Bereich von 0,6 µm bis 20 µm, bevorzugt von 0,8 µm bis 10 µm, besonders bevorzugt von 1 µm bis 5 µm, aufweisen.

## Patentansprüche

1. Verfahren zur Herstellung von Metallpulver, bei welchem
a) eine Mischung umfassend mindestens ein Metallmaterial und mindestens ein Lösungsmittel bereitgestellt wird, wobei das mindestens eine Metallmaterial ausgewählt ist aus der Gruppe bestehend aus Alkalimetallen, Indium sowie Mischungen und Legierungen hiervon und wobei das mindestens eine Lösungsmittel einen Dampfdruck bei 20 °C von mindestens 0,002 bar aufweist und ausgewählt ist aus der Gruppe bestehend aus aliphatischen Kohlenwasserstoffen, aromatischen Kohlenwasserstoffen, sowie Mischungen hiervon,
b) die Mischung mindestens einem Mahlprozess unterzogen wird, der bei einer Temperatur erfolgt, die mindestens 10 °C unter dem Schmelzpunkt des mindestens einen Lösungsmittels liegt, und
c) das mindestens eine Lösungsmittel durch Abdampfen von der Mischung abgetrennt wird.

2. Verfahren nach dem vorhergehenden Anspruch, **dadurch gekennzeichnet, dass** das mindestens eine Metallmaterial ausgewählt ist aus der Gruppe bestehend aus Lithium, Natrium, Indium sowie Mischungen und Legierungen hiervon.

3. Verfahren nach einem der vorhergehenden Ansprüche, **dadurch gekennzeichnet, dass** das mindestens eine Metallmaterial als Granulat, als mindestens eine Folie, und/oder als mindestens ein Barren vorliegt, wobei das Granulat vorzugsweise aus Granulatpartikeln mit einer mittleren Partikelgröße d50 im Bereich von 0,5 mm bis 10 mm, bevorzugt von 1 mm bis 5 mm, besteht.

4. Verfahren nach einem der vorhergehenden Ansprüche, **dadurch gekennzeichnet, dass** das mindestens eine Lösungsmittel
- ausgewählt ist aus der Gruppe bestehend aus Xylol, Toluol, Hexan, Heptan, Octan, Nonan, Cyclohexan, sowie Mischungen hiervon, bevorzugt ausgewählt ist aus der Gruppe bestehend aus p-Xylol, n-Heptan, sowie Mischungen hiervon, und/oder
- einen Dampfdruck bei 20 °C von mindestens 0,005 bar, bevorzugt von mindestens 0,01 bar, besonders bevorzugt von mindestens 0,05 bar, ganz besonders bevorzugt im Bereich von 0,09 bar bis 0,14 bar, aufweist, und/oder
- einen Siedepunkt von maximal 151 °C, bevorzugt von maximal 140 °C, besonders bevorzugt im Bereich von 60 °C bis 140 °C, aufweist.

5. Verfahren nach einem der vorhergehenden Ansprüche, **dadurch gekennzeichnet, dass** der mindestens eine Mahlprozess
- über eine Dauer von 1 min bis 5 h, bevorzugt von 10 min bis 90 min, erfolgt, und/oder
- in einer Schwingmühle bei einer Schwingfrequenz im Bereich von 1 Hz bis 100 Hz, bevorzugt von 5 Hz bis 40 Hz, erfolgt.

6. Verfahren nach einem der vorhergehenden Ansprüche, **dadurch gekennzeichnet, dass** der mindestens eine Mahlprozess mindestens einen Vormahlprozess und mindestens einen Hauptmahlprozess umfasst, die in einer Schwingmühle durchgeführt werden, wobei vorzugsweise der mindestens eine Vormahlprozess bei einer Schwingfrequenz im Bereich von 1 Hz bis 10 Hz und über eine Dauer von 1 min bis 30 min erfolgt und/oder der mindestens eine Hauptmahlprozess bei einer Schwingfrequenz im Bereich von 15 Hz bis 100 Hz, bevorzugt von 20 Hz bis 40 Hz, und über eine Dauer von 10 min bis 5 h, bevorzugt von 20 min bis 90 min, erfolgt.

7. Verfahren nach einem der vorhergehenden Ansprüche, **dadurch gekennzeichnet, dass** der mindestens eine Mahlprozess unter Verwendung von Mahlkugeln erfolgt, wobei die Mahlkugeln vorzugsweise
- ein Material enthalten oder daraus bestehen, welches ausgewählt ist aus der Gruppe bestehend aus Zirconiumdioxid, Siliciumnitrid, Wolframcarbid, Edelstahl, sowie Mischungen hiervon, wobei die Mahlkugeln bevorzugt Zirconiumdioxid enthalten oder daraus bestehen, und/oder
- jeweils einen Durchmesser im Bereich von 5 mm bis 30 mm, bevorzugt von 10 mm bis 20 mm, aufweisen.

8. Verfahren nach einem der vorhergehenden Ansprüche, **dadurch gekennzeichnet, dass** der mindestens eine Mahlprozess bei einer Temperatur erfolgt,
- die mindestens 20 °C, bevorzugt mindestens 30 °C, besonders bevorzugt mindestens 40 °C, unter dem Schmelzpunkt des mindestens einen Lösungsmittels liegt, und/oder
- die maximal -100 °C beträgt, bevorzugt maximal -150 °C beträgt, besonders bevorzugt im Bereich von -230°C bis -150 °C liegt, ganz besonders bevorzugt im Bereich von -210 °C bis -175 °C liegt.

9. Verfahren nach einem der vorhergehenden Ansprüche, **dadurch gekennzeichnet, dass** der mindestens eine Mahlprozess unter Kühlung mit flüssigem Stickstoff erfolgt.

10. Verfahren nach einem der vorhergehenden Ansprüche, **dadurch gekennzeichnet, dass** das Abdampfen in Schritt c) bei einer Temperatur im Bereich von 5 °C bis 50 °C, bevorzugt bei einer Temperatur im Bereich von 10 °C bis 40 °C, besonders bevorzugt bei Raumtemperatur, erfolgt.

11. Metallpulver aus einem Metallmaterial ausgewählt aus der Gruppe bestehend aus Alkalimetallen, Indium sowie Mischungen und Legierungen hiervon, wobei das Metallpulver aus Pulverpartikeln besteht, die als Aggregate vorliegen und jeweils eine Partikelgröße im Bereich von 0,6 µm bis 20 µm aufweisen, und wobei das Metallpulver mit einem Verfahren gemäß einem der Ansprüche 1 bis 10 herstellbar oder hergestellt ist.

12. Metallpulver nach Anspruch 11, **dadurch gekennzeichnet, dass** das mindestens eine Metallmaterial ausgewählt ist aus der Gruppe bestehend aus Lithium, Natrium, Indium sowie Mischungen und Legierungen hiervon.

13. Metallpulver nach Anspruch 11 oder 12, **dadurch gekennzeichnet, dass**
- die Pulverpartikel jeweils eine Partikelgröße im Bereich von 0,8 µm bis 10 µm, bevorzugt von 1 µm bis 5 µm, aufweisen, und/oder
- die Aggregate jeweils eine Partikelgröße im Bereich von 1 µm bis 250 µm, bevorzugt von 5 µm bis 100 µm, aufweisen.

14. Verwendung eines Metallpulvers nach einem der Ansprüche 11 bis 13 zur Herstellung von Elektroden, vorzugsweise Elektroden für Batterien, als chemisches Agens, oder als Brennstoff.
